# EUROPEAN PATENT APPLICATION

(11) **EP 1 038 639 A2**
(43) Date of publication of application: **27.09.2000**
(21) Application number: 00104856.0
(22) Date of filing: 07.03.2000
(51) Int. Cl.: B25G 1/04, F16B 7/14

(54) **Telescopic rods with opening element with board head**

(30) Priority: 12.03.1999 IT PD990044
(71) Applicant: Longo, Renato, 35010 Pieve di Curtarolo (IT)
(72) Inventor: Longo, Renato, 35010 Pieve di Curtarolo (IT)
(74) Representative: Gustorf, Gerhard, Dipl.-Ing.

(57) **Abstract**

The invention is a new telescopic rod provided with a truncated cone-shaped threaded opening element (Esf), applied to the inner tube (Ti), having a broad head (A), with protrusions and/or a ring (A), suitable for adhering to the end (Eg) of the outer tube (Te), in such away as to adhere - when the rod is completely lengthened - to the bush (Eg) of the outer tube. An expander (X) for the mutual constraint of the two tubes is applied to the opening element (Esf). The insertion of the inner tube into the outer tube is carried out by proceeding inversely with respect to the known technique, while the threaded head suitable for holding a broom or other tool is applied after the insertion.

## Description

The present invention concerns the sector of household accessories and in particular it concerns a locking system for the various elements of telescopic rods.

These telescopic elements can be used to support brooms, window brushes, standards, hangers, hooks, curtains and any other tool that can be moved and supported manually.

For ease of description the application of the invention to brooms will be described here below, though being just one among the many possible applications.

Brooms are known, whose handle is divided into two or more telescopic tubes that slide one into the other.

Obviously, it is necessary to adopt locking systems to be positioned between the tubes, so that said tubes cannot slide mutually and the broom can be used with the desired handle length.

These brooms are particularly useful to clean floors, ceilings - even if very high -, walls, etc. However, the assembly of said tubes one inside the other and their locking may represent a problem.

At present, expansion elements are used, which comprise a cylindrical body provided with a truncated cone-shaped internal thread.

The applicant is already the holder of another patent application whose object is a locking device comprising a cylindrical expansion element provided with two truncated-cone shaped internal threads. Said cylinder is provided with two series of cuts at its ends, or preferably with a single cut on the whole length of the element, in such a way as to permit its separation and opening.

The internal surfaces are provided with two truncated cone-shaped threads converging towards the center.

On the expansion cylinder there is a protrusion that serves to hold the head of the opening element, in such a way as to prevent the inner tube from sliding off.

The outer surface of the expander is provided with knurls and protrusions, in such a way as to facilitate the adhesion of the expander to the inner surface of the outer tube.

Inside said expander, which can slide into the outer tube, a opening element is inserted, which is integral with the inner tube, comprising a truncated cone-shaped point provided with a thread that must be screwed inside said expander to widen it and exert pressure against the inner walls of the outer tube. In this way, by rotating the inner tube with respect to the outer tube, it is possible to screw the opening element on the expander, with consequent locking of the two tubes.

This system can obviously be applied on two or more telescopic tubes.

This system has the drawback that in the extreme position, that is, when the two tubes are completely extended and the maximum length available has been reached, the edge of the expander comes into contact with the end of the outer tube. If the user exerts a traction force slightly greater than necessary, as it may often happen when one is in a hurry, the friction among the various parts prevents their mutual rotation, and therefore the opening element cannot be screwed on the expander.

To avoid these inconveniences, at present it is necessary to repeat the operation several times, and the user gets the impression that the implement is borken or does not function correctly.

The object of the present invention is a new opener-expander unit provided with broad head positioned at the base of the opener and suitable for coming into contact with the terminal part (bush and/or taper) of the outer tube, which prevents the contact between the expander edge and the terminal part (bush and/or taper) of the outer tube.

The opening element substantially comprises a truncated cone-shaped threaded part with one or more protrusions or preferably a ring with suitable thickness and diameter slightly longer than the diameter of the inner tube positioned under it. Consequently, even the assembly of the telescopic rods takes place in a different manner. In fact, said broad head with the expander must be first applied to the inner tube, and then the other free head must be inserted in the outer tube, so that it can go out of the other end, while the widened opener, on which the expander has been applied, comes into contact with the terminal holding part of the outer tube. Finally, the threaded head suitable for being introduced in the broom, brush, etc. is applied to the free end of the inner tube, while the handle is applied to the other end of the outer tube.

According to an equivalent application, the broad head (A) can coincide with or be replaced by a corresponding enlargement of the end of the inner tube (Ti).

The following is just an example among many of the invention in question, illustrated in the enclosed drawings, wherein:

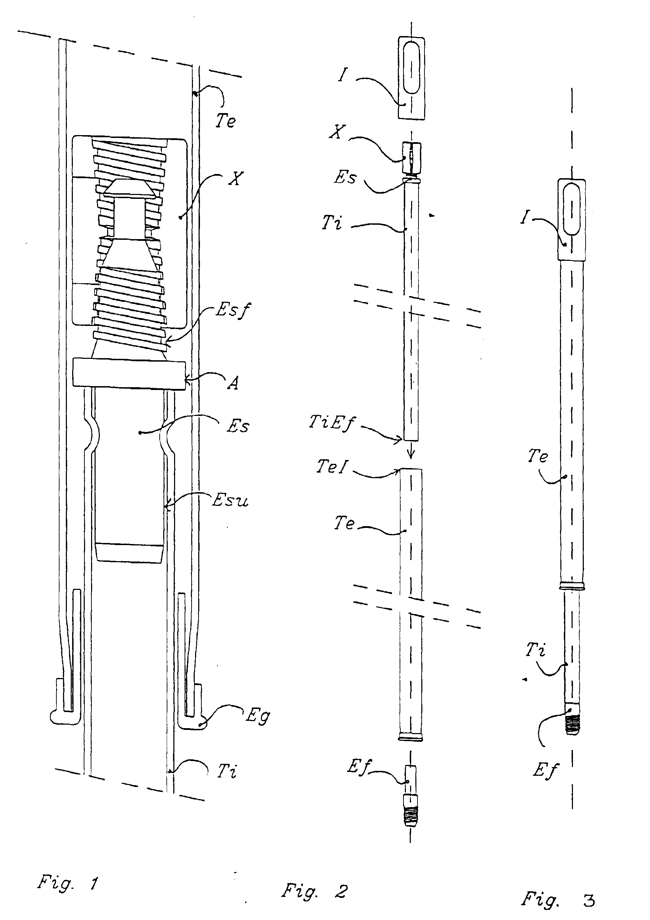

- Figure 1 shows a section of the joining parts of the inner tube (Ti) and outer tube (Te) in detail.
   The outer tube (Te) is provided with a terminal guide element (Eg) for the inner tube (Ti) that also covers the edge of the outer tube (Te) itself.
   The inner tube (Ti), on its end positioned inside the outer tube (Te), is joined to the expander (Es) that in turn is screwed onto the expansion element (X).
   The expander (Es) is provided, between its threaded part (Esf) and its connection (Esu) with the inner tube (Ti), with a broad head (A) suitable for coming into contact with the terminal guide element (bush) (Eg) of the outer tube (Te) and therefore for preventing the contact between the expansion element (X) and said terminal guide element (bush) (Eg) of said outer tube (Te).
Figure 2 shows the assembly sequence in which the inner tube (Ti) provided with expander (Es) and expansion element (X) is inserted with its free end inside the outer tube (Te) from the end that will house the handle (I). When the inner tube (Ti) has passed through the whole outer tube (Te), its free end is fitted with a threaded end (Ef) for the connection with brooms or brushes. Finally, the handle (I) is added to the outer tube (Te).
   The end of the inner tube (Ti) to which the threaded end (Ef) is connected is indicated by TiEf, while the end of the outer tube (Te) to which the handle (I) is connected is indicated by TeI.
Figure 3 shows the rod completely assembled.

Therefore, with reference to the above description and to the enclosed drawings, the following claims are put forth.

## Claims

1. Telescopic rod characterized in that it comprises a truncated cone-shaped, threaded opening element applied to the inner tube, provided with broad head, with protrusions and/or a ring, suitable for adhering to the end of the outer tube and wherein an expander for the mutual constraint of the two tubes is applied to said opening element.

2. Telescopic rod according to claim 1, characterized in that the threaded head is applied after the insertion of the inner tube into the outer tube.

3. Telescopic rod characterized in that it comprises a truncated cone-shaped, threaded opening element provided with broad head, with protrusions and/or a ring, applied to the inner tube with enlarged end, so that either the broad head of the opening element or the enlarged end of the inner tube is suitable for adhering to the end of the outer tube and wherein an expander for the mutual constraint of the two tubes is applied to said opening element.
